# EUROPÄISCHE PATENTSCHRIFT

(11) **EP 1 415 077 B1**
(45) Veröffentlichungstag und Bekanntmachung des Hinweises auf die Patenterteilung: **04.01.2006**
(21) Anmeldenummer: 02791482.9
(22) Anmeldetag: 29.07.2002
(51) Int. Cl.: F02D 41/30, F02D 41/38, F02D 41/40

(54) **SCHALTUNGSANORDNUNG UND VERFAHREN ZUR REGELUNG EINER ELEKTRISCHEN KRAFTSTOFFPUMPE IN EINEM RÜCKLAUFFREIEN KRAFTSTOFF-FÖRDERSYSTEM**
CIRCUIT ARRANGEMENT AND METHOD FOR CONTROLLING AN ELECTRIC FUEL PUMP IN A NON-RETURN FUEL DELIVERY SYSTEM
CIRCUITERIE ET PROCEDE POUR LA REGULATION D'UNE POMPE ELECTRIQUE D'ALIMENTATION EN CARBURANT DANS UN SYSTEME D'ALIMENTATION EN CARBURANT SANS RETOUR

(30) Priorität: 31.07.2001 DE 10137315
(43) Veröffentlichungstag der Anmeldung: 06.05.2004
(73) Patentinhaber: Volkswagen Aktiengesellschaft, 38436 Wolfsburg (DE)
(72) Erfinder: KAHLERT, Andreas, 38448 Wolfsburg (DE); SCHILLING, Ralf, 49477 Ibbenbüren (DE); RITSCHEL, Michael, 38118 Braunschweig (DE); WACHTENDORF, Axel, 38321 Klein Denkte (DE)
(74) Vertreter: Banzer, Hans-Jörg
(86) Internationale Anmeldenummer: PCT/EP2002/008429
(87) Internationale Veröffentlichungsnummer: WO 2003/012274

(56) Entgegenhaltungen:
- DE-A- 4 335 866
- DE-A- 19 951 410
- GB-A- 2 293 895
- US-A- 5 586 539
- US-A- 5 902 346

## Beschreibung

Die vorliegende Erfindung betrifft eine Schaltungsanordnung zur Regelung einer elektrischen Kraftstoffpumpe bzw. der Förderleistung einer elektrischen Kraftstoffpumpe in einem rücklauffreien Kraftstoff-Fördersystem nach dem Oberbegriff von Patentanspruch 1 sowie ein Verfahren zur Regelung einer elektrischen Kraftstoffpumpe in einem rücklauffreien Kraftstoff-Fördersystem nach dem Oberbegriff von Patentanspruch 7.

Ein herkömmliches Kraftstoff-Fördersystem enthält eine elektrische Kraftstoffpumpe, die in einem Kraftstofftank angeordnet ist und Kraftstoff aus dem Kraftstofftank in eine erste Kraftstoffleitung zu einer Hochdruckpumpe fördert, welche über eine weitere Kraftstoffleitung mit mehreren Kraftstoff-Einspritzventilen verbunden ist. Die Förderleistung der elektrischen Kraftstoffpumpe wird über eine Motorsteuerung geregelt, die eine Regelschaltung enthält bzw. mit einer Regelschaltung verbunden ist, welche die erforderliche Förderleistung der elektrischen Kraftstoffpumpe bestimmt und ein entsprechendes Steuersignal in der Motorsteuerung erzeugt bzw. an die Motorsteuerung ausgibt.

Bei rücklauffreien Kraftstoff-Fördersystemen, d.h. bei Kraftstoff-Fördersystemen, die keine Rücklaufleitung für überschüssigen Kraftstoff oder Dampfblasen im Kraftstoff von einer den Kraftstoff-Einspritzventilen vorgeschalteten Kraftstoff-Einspritzleiste in die Kraftstoffleitung aus dem Kraftstofftank bzw. in den Kraftstofftank aufweisen, besteht das Problem, daß der überschüssige Kraftstoff oder die Dampfblasen die ordnungsgemäße Versorgung der Kraftstoff-Einspritzventile gefährden.

Zur Vermeidung dieses Problems ist es beispielsweise aus der EP 0 713 968 B1 bekannt, die Kraftstoff-Einspritzleiste eines rücklauffreien Kraftstoff-Fördersystems mit einem Sammelraum für Kraftstoff-Dampfblasen zu versehen, aus dem die Dampfblasen in die Kraftstoffzuleitung der Kraftstoff-Einspritzleiste zurückgeführt werden.

Weiter offenbart die DE 43 35 866 C2 ein rücklauffreies Kraftstoff-Fördersystem, bei dem die elektrische Kraftstoffpumpe mit veränderlicher Geschwindigkeit antreibbar ist, um den Kraftstoffdruck in dem Kraftstoff-Fördersystem den aktuellen Betriebsbedingungen anzupassen. Hierzu sind ein Differenzdrucksensor zum Ermitteln der Kraftstoffdruckdifferenz zwischen dem Motoreinlaßsaugrohrunterdruck und dem Kraftstoffdruck in der Einspritzleiste und ein Temperatursensor zum Überwachen der Temperatur des Kraftstoffs in der Kraftstoff-Einspritzleiste vorgesehen, so daß die Pumpgeschwindigkeit der Kraftstoffpumpe entsprechend der ermittelten Kraftstoffdruckdifferenz und der Kraftstofftemperatur eingestellt werden kann.

Auch bei Kraftstoff-Fördersystemen mit Rücklaufleitung ist die Steuerung der Kraftstoff-Zumessung in Abhängigkeit von den aktuellen Betriebsbedingungen im Fördersystem üblich. Bei dem Kraftstoff-Fördersystem der DE 195 36 109 A1 werden zum Beispiel die Temperatur und der Druck in den Brennräumen der Brennkraftmaschine sowie der Kraftstoffdruck in der Kraftstoff-Einspritzleiste überwacht. Weiter sind einige Kraftstoff-Fördersysteme bekannt (z.B. DE 195 47 644 A1 und DE 198 41 533 A1), bei denen die Kraftstoff-Zumessung der Kraftstoff-Einspritzventile in Abhängigkeit von der Temperatur und/oder dem Druck des Kraftstoffs geregelt wird.

Das Dokument US 5 902 346 beschreibt die Regelung der Förderleistung einer Kraftstoffpumpe basierend auf der Temperatur des Kraftstoffes in Rail.

Es ist eine Aufgabe der vorliegenden Erfindung, ein rücklauffreies Kraftstoff-Fördersystem bereitzustellen, das kontinuierlich variabel an die Betriebsbedingungen anpaßbar ist. Insbesondere sollen eine Schaltungsanordnung und ein Verfahren zur Regelung einer elektrischen Kraftstoffpumpe in einem solchen rücklauffreien Kraftstoff-Fördersystem geschaffen werden, deren Förderleistung jederzeit optimal auf die Betriebsbedingungen abgestimmt ist.

Diese Aufgabe wird durch eine Schaltungsanordnung mit den Merkmalen von Patentanspruch 1 bzw. ein Verfahren mit den Merkmalen von Patentanspruch 7 gelöst. Vorteilhafte Ausgestaltungen und Weiterbildungen der Erfindung sind in den Unteransprüchen angegeben.

Die Schaltungsanordnung zur Regelung einer elektrischen Kraftstoffpumpe in einem rücklauffreien Kraftstoff-Fördersystem gemäß der vorliegenden Erfindung weist eine elektrische Kraftstoffpumpe auf, die in einem Kraftstofftank angeordnet ist und Kraftstoff aus dem Kraftstofftank in eine erste Kraftstoffleitung zu einer Hochdruckpumpe fördert, welche über eine zweite Kraftstoffleitung mit mehreren Kraftstoff-Einspritzventilen verbunden ist. Die Schaltungsanordnung enthält weiter eine Motorsteuerung zur Regelung der Förderleistung der elektrischen Kraftstoffpumpe, welche eine Regelschaltung zur Bestimmung der erforderlichen Förderleistung der elektrischen Kraftstoffpumpe und Ausgabe eines der bestimmten erforderlichen Förderleistung entsprechenden Steuersignals enthält oder mit einer solchen Regelschaltung verbunden ist. Die erfindungsgemäße Schaltungsanordnung bzw. das erfindungsgemäße Verfahren zeichnen sich dadurch aus, daß die erforderliche Förderleistung der elektrischen Kraftstoffpumpe basierend auf einer höchsten im Kraftstoff-Fördersystem vorhandenen Temperatur geregelt wird, welche mittels einer Temperaturmodellschaltung der Regelschaltung bestimmt wird.

Indem die erforderliche Förderleistung der elektrischen Kraftstoffpumpe basierend auf der maximalen Kraftstofftemperatur im Kraftstoff-Fördersystem und nicht wie bei bekannten Systemen basierend auf der Kraftstofftemperatur an einer vorgegebenen Stelle im Kraftstoff-Fördersystem bestimmt wird, wird gewährleistet, daß der Kraftstoffdruck an keiner Stelle im Fördersystem den Grenzdruck überschreitet und sich Kraftstoff-Dampfblasen bilden können, welche die ordnungsgemäße Versorgung der Kraftstoff-Einspritzventile gefährden können. Durch die derart optimale Anpassung der Förderleistung der elektrischen Kraftstoffpumpe an die Betriebsbedingungen können in vorteilhafter Weise auch die Leistungsaufnahme der elektrischen Kraftstoffpumpe sowie der Kraftstoffverbrauch gesenkt werden.

Im bevorzugten Ausführungsbeispiel wird die höchste im Kraftstoff-Fördersystem vorhandene Temperatur basierend auf einer Motortemperatur, einer Umgebungstemperatur und einer Fahrzeuggeschwindigkeit (v_{kfz}) bestimmt, welche der Regelschaltung von entsprechenden Sensoren zugeführt werden. Vorzugsweise wird bei der Bestimmung der höchsten im Kraftstoff-Fördersystem vorhandenen Temperatur außerdem eine Kühlwirkung durch die das Kraftstoff-Fördersystem umströmende Luft und/oder der Betriebszustand des Motors berücksichtigt.

Die erforderliche Förderleistung der elektrischen Kraftstoffpumpe wird dann basierend auf dem erforderlichen Kraftstoffdruck im Kraftstoff-Fördersystem, welcher aus der bestimmten höchsten im Kraftstoff-Fördersystem vorhandenen Temperatur berechnet wird, sowie dem aktuell im Kraftstoff-Fördersystem vorhandenen Kraftstoffdruck bestimmt.

Die Erfindung wird nachfolgend anhand eines bevorzugten Ausführungsbeispiels unter Bezugnahme auf die beiliegende Zeichnung näher erläutert. Darin zeigen:
- Fig. 1: das Blockschaltbild der Schaltungsanordnung der elektrischen Kraftstoffpumpe gemäß der vorliegenden Erfindung; und
- Fig. 2: das Blockschaltbild der Regelschaltung, die in der Schaltungsanordnung von Fig. 1 eingesetzt wird.

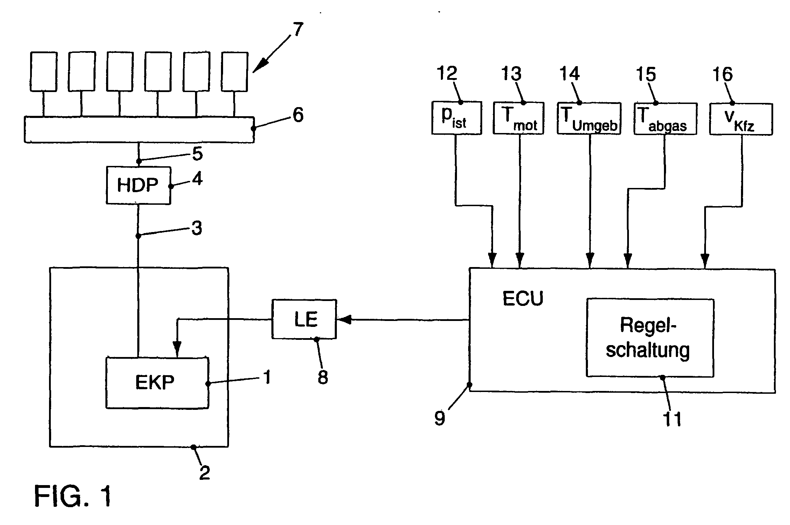

In Fig. 1 ist zunächst in schematischer Darstellung ein rücklauffreies Kraftstoff-Fördersystem mit einer in einem Kraftstofftank 2 eines Kraftfahrzeugs angeordneten elektrischen Kraftstoffpumpe (EKP) 1 dargestellt. Die Kraftstoffpumpe 1 fördert den Kraftstoff aus dem Kraftstofftank 2 über eine erste Kraftstoffleitung 3 und ein Ventil (nicht dargestellt) zu einer Hochdruckpumpe (HDP) 4. Über eine zweite Kraftstoffleitung 5 führt die Hochdruckpumpe 4 den Kraftstoff mit einem Druck von üblicherweise größer als 50 bar einer Kraftstoff-Einspritzleiste 6 zu. Diese Kraftstoff-Einspritzleiste 6, häufig auch als Rail bezeichnet, versorgt mehrere Kraftstoff-Einspritzventile 7 einer Brennkraftmaschine (nicht dargestellt) mit dem Kraftstoff. Die Kraftstoff-Einspritzventile 7 werden in üblicher Weise in Abhängigkeit von verschiedenen Betriebsbedingungen angesteuert.

Die Aufgabe der elektrischen Kraftstoffpumpe 1 ist die ausreichende Versorgung der Hochdruckpumpe 4 mit Kraftstoff. Darüber hinaus muß sichergestellt werden, daß der Kraftstoff in den Kraftstoffleitungen 3, 5 auf der Niederdruckseite sowie der Versorgungsseite der Hochdruckpumpe 4 nicht in die gasförmige Phase übergeht. Dies wird über die Einstellung des Kraftstoffdrucks geregelt.

Das in Fig. 1 dargestellte Kraftstoff-Fördersystem weist keine Rücklaufleitung von der Kraftstoff-Einspritzleiste 6 in den Kraftstofftank 2 auf. Es ist deshalb erforderlich, zur Regelung des Kraftstoffdrucks die Förderleistung der elektrischen Kraftstoffpumpe 1 der aktuellen Kraftstoffentnahme durch die Einspritzventile 7 anzupassen. Der Betriebspunkt und die daraus resultierende Leistungsaufnahme der elektrischen Kraftstoffpumpe 1 wird durch die Größen Kraftstoffdruck und Kraftstoffördermenge festgelegt. Regelabweichungen zwischen Soll- und Ist-Kraftstoffdruck pₛₒₗₗ, pᵢₛₜ in der Kraftstoffleitung 3 können verringert werden, indem die erforderliche Kraftstoffördermenge und der erforderliche Kraftstoffdruck in die Berechnung des Betriebspunkts der elektrischen Kraftstoffpumpe 1 einfließen. Somit können Druckabweichungen über den maximal zulässigen Druck in den Kraftstoffleitungen und unter den minimalen Dampfdruckpunkt, bei dem der Kraftstoff noch in der flüssigen Phase vorliegt, verhindert werden.

Das rücklauffreie Kraftstoff-Fördersystem muß ohne einen nennenswerten Spüleffekt von warmem mit kaltem Kraftstoff auf der Niederdruckseite der Hochdruckpumpe 4 auskommen. Dies führt zu einem relativ hohen Temperaturniveau in der Kraftstoffleitung 5 im motornahen Bereich. Der eingestellte Kraftstoffdruck muß diesen Effekt berücksichtigen. Insbesondere während und nach einem Heißstartvorgang muß für einen Zeitraum ein entsprechendes Druckniveau gehalten werden, um sicherzustellen, daß keine Dampfblasen in den Kraftstoffleitungen 3, 5 entstehen.

Die in dem Kraftstofftank 2 montierte und in den Kraftstoff eintauchende Kraftstoffpumpe 1 besteht aus einem Gleichstrommotor als Antrieb und einer Strömungspumpe als Fördereinheit. Die elektrische Kraftstoffpumpe 1 wird von einer Leistungsendstufe (LE) 8 mit Spannung versorgt, die eine kontinuierliche variable Einstellung der Förderleistung der Kraftstoffpumpe 1 ermöglicht. Das Steuersignal der Leistungsendstufe 8 ist ein pulsweitenmoduliertes (PWM-) Spannungssignal, wobei mit der Pulsweite die an der Kraftstoffpumpe 1 effektiv anliegende Spannung eingestellt werden kann.

Der Leistungsendstufe 8 wird als Eingangssignal ein PWM-Signal von einer Motorsteuerung (Electronic Control Unit - ECU) 9 zugeführt. Die Leistungsendstufe 8 steuert die elektrische Kraftstoffpumpe 1 entsprechend diesem Eingangssignal der Motorsteuerung 9 an. In der Motorsteuerung 9 ist eine Regelschaltung 11 integriert, welche über einen geeigneten Regelalgorithmus die erforderliche Förderleistung der elektrischen Kraftstoffpumpe 1 berechnet und ein entsprechendes Steuersignal 10 ausgibt. Alternativ kann auch eine separate Regelschaltung 11 vorgesehen sein, die mit der Motorsteuerung 9 verbunden ist. Die Motorsteuerung 9 dient üblicherweise auch der Steuerung der Hochdruckpumpe 4 und der Kraftstoff-Einspritzventile 7.

Zur Berechnung der erforderlichen Förderleistung der Kraftstoffpumpe 1 stellt die Motorsteuerung 9 der Regelschaltung 11 verschiedene Meßwerte des Systems zur Verfügung. Hierzu ist die Motorsteuerung 9 mit einem Drucksensor 12 verbunden, der den Kraftstoffdruck pᵢₛₜ in der Kraftstoffleitung 3 auf der Niederdruckseite zwischen dem Kraftstoffilter (nicht dargestellt) und der Hochdruckpumpe 4 mißt. Weiter ist die Motorsteuerung 9 mit einem ersten Temperatursensor 13 zur Erfassung der Motortemperatur Tₘₒₜ, einem zweiten Temperatursensor 14 zur Erfassung der Umgebungstemperatur T_{umgeb}, einem dritten Temperatursensor 15 zur Erfassung der Abgastemperatur T_{abgas} nach dem Hauptkatalysator und einer Einrichtung 16 zur Erfassung der Fahrzeuggeschwindigkeit v_{kfz} gekoppelt.

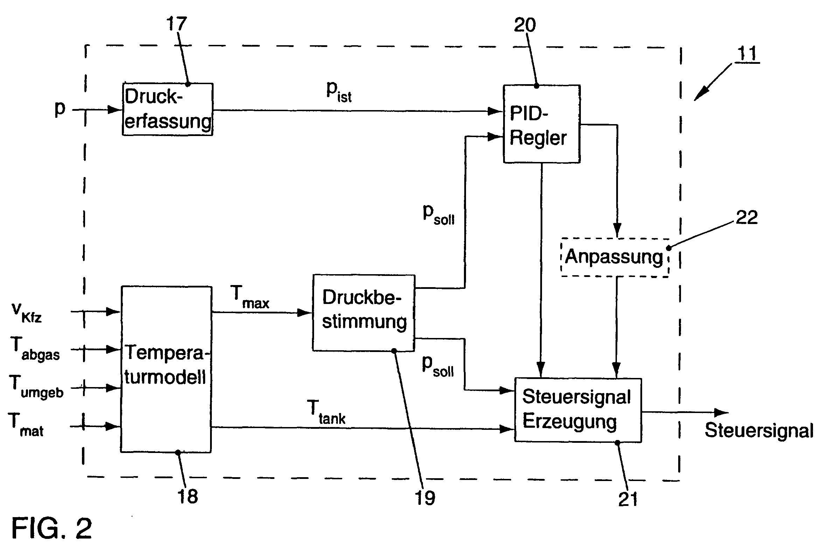

Der Aufbau und die Funktionsweise der Regelschaltung 11 der Motorsteuerung 9 werden nachfolgend anhand von Fig. 2 näher erläutert.

Die Regelschaltung 11 des in Fig. 2 gezeigten bevorzugten Ausführungsbeispiels weist im wesentlichen eine Druckerfassungsschaltung 17, eine Temperaturmodellschaltung 18 zur Bestimmung der höchsten in dem Kraftstoff-Fördersystem vorhandenen Temperatur Tₘₐₓ, eine Druckbestimmungsschaltung 19 zur Bestimmung des Kraftstoffsolldrucks pₛₒₗₗ auf der Basis der maximalen Temperatur Tₘₐₓ, einen PID-Regler 20, eine Steuersignal-Erzeugungsschaltung 21 und optional eine Anpassungsschaltung 22 auf.

Der Druckerfassungsschaltung 17 wird der Spannungswert des Drucksensors 12 zugeführt, der den Kraftstoffdruck auf der Niederdruckseite der Hochdruckpumpe 4 mißt. Der eingelesene Spannungswert wird zunächst mit Hilfe der Kalibrierungskennlinie des Drucksensors 12 in einen Druckwert umgerechnet. Anschließend wird dieser Druckwert tiefpaßgefiltert, um hochfrequente Störungen zu korrigieren, die insbesondere bei aktiver Hochdruckpumpe 4, d.h. bei aufgebautem Hochdruck in der zweiten Kraftstoffleitung 5 auftreten. Die Filterzeitkonstante des Tiefpaßfilters muß dabei so gewählt werden, daß die von der Hochdruckpumpe 4 erzeugten Schwingungen gedämpft werden. Je nach Art der verwendeten Hochdruckpumpe 4 und je nach deren Betriebszustand (aktiv - passiv) wird eine vorgegebene Zeitkonstante des Tiefpaßfilters verwendet. Das Ausgangssignal der Druckerfassungsschaltung 17, der Istdruck im Kraftstoff-Fördersystem pᵢₛₜ, wird dem Regler 20 zugeleitet. Wahlweise kann von der Druckerfassungsschaltung 17 zusätzlich auch ein ungefilterter Istdruck des Kraftstoff-Fördersystems ausgegeben werden.

In der Temperaturmodellschaltung 18 wird die höchste Temperatur im Kraftstoff-Fördersystem · Tₘₐₓ berechnet bzw. modelliert. Hierzu werden der Temperaturmodellschaltung 18 von den entsprechenden Sensoren 13-16 die Werte für die Motortemperatur Tₘₒₜ, die Umgebungstemperatur T_{umgeb}, die Abgastemperatur T_{abgas} nach dem Hauptkatalysator und die Fahrzeuggeschwindigkeit v_{kfz} als Eingangssignale zugeführt.

Die Modelltemperatur Tₘₐₓ setzt auf der Motortemperatur Tₘₒₜ auf. Bei einer großen Temperaturdifferenz zwischen der Motortemperatur und der Umgebungstemperatur T_{umgeb} kann man davon ausgehen, daß die Kühlwirkung durch die um die Hochdruckpumpe 4 und das übrige Kraftstoff-Fördersystem strömende Luft relativ groß ist. Hierbei legt die Fahrzeuggeschwindigkeit v_{kfz} fest, wie groß der Luftaustausch und damit die Kühlwirkung durch die Luft ausfällt. Deshalb wird von der Motortemperatur Tₘₒₜ die mit einem Korrekturfaktor k multiplizierte Temperaturdifferenz zwischen Umgebungstemperatur und Motortemperatur (Tₘₒₜ - T_{umgeb}) abgezogen, wobei der Korrekturfaktor k um so größer gewählt wird, je größer die Fahrzeuggeschwindigkeit v_{kfz} und je niedriger die Umgebungstemperatur T_{umgeb} sind. Zur Berechnung der gesuchten höchsten Systemtemperatur Tₘₐₓ wird außerdem berücksichtigt, daß es bei geringem Kraftstoffbedarf des Motors auf der Niederdruckseite der Hochdruckpumpe 4 zu einer Temperaturerhöhung kommt, weil eine vom Motor nicht benötigte Kraftstoffmenge vom Mengensteuerventil (nicht dargestellt) der Hochdruckpumpe 4 zurückgeleitet und wieder entspannt wird und diese entspannte Kraftstoffmenge bei diesem Prozeß einen Temperatureintrag erfahren hat. Weiter wird der Betriebszustand des Motors (betriebswarm - kalt) in der Zeitkonstante einer Tiefpaßfilterung des Temperaturwertes berücksichtigt. Als Ergebnis der Tiefpaßfilterung erhält man die Maximaltemperatur Tₘₐₓ im Kraftstoff-Fördersystem.

Darüber hinaus wird in der Temperaturmodellschaltung 18 auch die Kraftstofftemperatur im Tank 2 Tₜₐₙₖ berechnet. Prinzipiell wird davon ausgegangen, daß der Kraftstoff im Tank 2 die gleiche Temperatur wie die Umgebung T_{umgeb} hat. Allerdings findet ein Temperatureintrag T_{abgas} in den Kraftstofftank 2 durch die Abgasanlage statt. Die hierdurch bedingte Temperaturerhöhung wird bei der Berechnung der Kraftstofftemperatur im Tank Tₜₐₙₖ berücksichtigt.

Die in der Temperaturmodellschaltung 18 berechnete Maximaltemperatur Tₘₐₓ wird in der Druckbestimmungsschaltung 19 dazu verwendet, den aktuell erforderlichen Mindestkraftstoffdruck im System festzulegen. Die Zuordnung des Mindestkraftstoffdrucks zu der berechneten Systemtemperatur Tₘₐₓ erfolgt über eine in der Druckbestimmungsschaltung 19 abgelegte Dampfdruckkurve, die dem im schlechtesten Fall anzunehmenden Kraftstoff entspricht.

Zur exakteren Abschätzung des erforderlichen Kraftstoffdrucks pₛₒₗₗ sind allerdings einige Korrekturen vorteilhaft. Bei hohen Motordrehzahlen und bei mittleren Kraftstofftemperaturen ist es notwendig, den Kraftstoffdruck auf der Niederdruckseite der Hochdruckpumpe 4 zu erhöhen, damit der Liefergrad der Hochdruckpumpe 4 nicht zu klein wird. Im Fall eines Heißstarts wird vorzugsweise auf einen fest vorgegebenen Solldruck umgeschaltet. Optional ist es auch möglich, die Solldruckermittlung anhand der maximalen Systemtemperatur Tₘₐₓ und der Motordrehzahl auszuschalten und einen konstanten Solldruck vorzugeben.

Zur Verbesserung der Förderleistung der elektrischen Kraftstoffpumpe 1 kann der so bestimmte Kraftstoffsolldruck mit einem vorgegebenen Kraftstoffsolldruck derart Maxgefiltert werden, daß beim Motorstart sowie in der Warmlaufphase auf den vorgegebenen Kraftstoffsolldruck umgeschaltet wird. Der vorgegebene Kraftstoffsolldruck ist dadurch definiert, daß beim Motorstart ein bestimmter Kraftstoffdruck vorgegeben werden muß, damit die Gemischbildung ordnungsgemäß arbeiten kann.

Der ausgewählte bestimmte oder vorgegebene Kraftstoffsolldruck wird durch zwei Grenzwerte des Kraftstoff-Fördersystems begrenzt und schließlich als Solldruck pₛₒₗₗ von der Druckbestimmungsschaltung 19 ausgegeben.

Der von der Druckbestimmungsschaltung 19 ermittelte Solldruck pₛₒₗₗ und der von der Druckerfassungsschaltung 17 ermittelte Istdruck pᵢₛₜ werden dem PID-Regler 20 als Eingangsgrößen zugeführt und dort verglichen. Die Gewichtung des I-Anteils des PID-Reglers 20 wird über eine Kennlinie der Motordrehzahl angepaßt, und die Addition des gewichteten P-Anteils und des gewichteten D-Anteils des PID-Reglers 20 werden als Reglerantwort ausgegeben.

Vorzugsweise detektiert der PID-Regler 20 zusätzlich den Betriebszustand der Schubabschaltung und setzt unter der Voraussetzung, daß der Istdruck pᵢₛₜ den Solldruck pₛₒₗₗ übersteigt, den I-Anteil des PID-Reglers auf Null. Dies verhindert ein zu schnelles und ausgeprägtes Abfallen des I-Anteils und damit auch der Reglerantwort des PID-Reglers. Bei einer Kraftstoffanforderung im Anschluß an eine Schubabschaltung kann mit dieser Maßnahme ein Druckabfall vermieden werden.

Der I-Anteil des PID-Reglers 20 kann in einer Anpassungsschaltung 22 für eine Anpassung genutzt werden. Ziel der Anpassung ist es, die Toleranzlage und die Lifetime-Veränderung der elektrischen Kraftstoffpumpe 1 auszugleichen. Der in der Anpassungsschaltung 22 berechnete Anpassungswert wird als nicht-flüchtiger Speicherwert an die Steuersignal-Erzeugungsschaltung 21 übergeben und braucht nicht vom PID-Regler 20 ausgeglichen werden.

In der Steuersignal-Erzeugungsschaltung 21 wird schließlich die aktuell erforderliche Förderleistung der elektrischen Kraftstoffpumpe 1 berechnet. Dazu werden der von der Druckbestimmungsschaltung 19 bestimmte Solldruck pₛₒₗₗ und die Reglerantwort zunächst gewichtet und zu einem Gesamtdruck addiert. Zusätzlich wird die aktuell eingespritzte Kraftstoffmenge in das Pumpenkennfeld eingelesen, das die Beziehung zwischen Druck und Fördermenge in Form der relativen Förderleistungsanforderung der elektrischen Kraftstoffpumpe 1 wiedergibt, so daß der Ausgabewert ein Relativwert ist, der sich auf 100% Förderleistung bezieht. Zusätzlich kann die relative Förderleistungsanforderung der Kraftstoffpumpe 1 mit der Kraftstofftemperatur im Tank 2 korrigiert werden, die zuvor von der Temperaturmodellschaltung 18 bestimmt worden ist.

Die so von der Regelschaltung 11 ermittelte relative Förderleistungsanforderung der Kraftstoffpumpe wird in ein PWM-Steuersignal umgesetzt, das außerdem auf die Leistungsendstufe 8 kalibriert ist. Das Steuersignal wird an den Ausgang der Motorsteuerung 9 gegeben und der Leistungsendstufe 8 zur entsprechenden Ansteuerung der elektrischen Kraftstoffpumpe 1 zugeführt.

Das erfindungsgemäße System zeichnet sich dadurch aus, daß die Förderleistung der elektrischen Kraftstoffpumpe der maximalen Kraftstofftemperatur im Kraftstoff-Fördersystem unter Berücksichtigung einiger vorgegebener und meßbarer Parameter angepaßt wird. Hierdurch wird im Gegensatz zu vorbekannten rücklauffreien Kraftstoff-Fördersystem jederzeit die Verhinderung der Bildung von Dampfblasen in den Kraftstoffleitungen gewährleistet.

Außerdem kann, da die Förderleistung der elektrischen Kraftstoffpumpe jederzeit optimal an die aktuellen Betriebszustände bzw. -bedingungen angepaßt wird, eine Einsparung der Stromaufnahme der elektrischen Kraftstoffpumpe sowie eine Einsparung des Kraftstoffverbrauchs erreicht werden. Die elektrische Kraftstoffpumpe ist kontinuierlich mit variabler Förderleistung antreibbar und gewährleistet so jederzeit eine optimale Versorgung der Hochdruckpumpe und damit der Kraftstoff-Einspritzventile mit der erforderlichen Kraftstoffmenge.

### BEZUGSZEICHENLISTE

- 1: elektrische Kraftstoffpumpe (EKP)
- 2: Kraftstofftank
- 3: Kraftstoffleitung Niederdruckseite
- 4: Hochdruckpumpe (HDP)
- 5: Kraftstoffleitung Hochdruckseite
- 6: Kraftstoff-Einspritzleiste
- 7: Kraftstoff-Einspritzventile
- 8: Leistungsendstufe (LE)
- 9: Motorsteuerung (ECU)
- 11: Regelschaltung
- 12: Drucksensor
- 13: erster Temperatursensor
- 14: zweiter Temperatursensor
- 15: dritter Temperatursensor
- 16: Einrichtung zur Geschwindigkeitserfassung
- 17: Druckerfassungsschaltung
- 18: Temperaturmodellschaltung
- 19: Druckbestimmungsschaltung
- 20: PID-Regler
- 21: Steuersignal-Erzeugungsschaltung
- 22: Anpassungsschaltung

## Patentansprüche

1. Schaltungsanordnung zur Regelung einer elektrischen Kraftstoffpumpe in einem rücklauffreien Kraftstoff-Fördersystem, mit
einer elektrischen Kraftstoffpumpe (1), die in einem Kraftstofftank (2) angeordnet ist, zum Fördern von Kraftstoff aus dem Kraftstofftank in eine erste Kraftstoffleitung (3) zu einer Hochdruckpumpe (4), welche über eine zweite Kraftstoffleitung (5) mit mehreren Kraftstoff-Einspritzventilen (7) verbunden ist; und
einer Motorsteuerung (9) zur Regelung der Förderleistung der elektrischen Kraftstoffpumpe (1), wobei die Motorsteuerung (9) eine Regelschaltung (11) zur Bestimmung der erforderlichen Förderleistung der elektrischen Kraftstoffpumpe (1) und Ausgabe eines der bestimmten erforderlichen Förderleistung entsprechenden Steuersignals enthält oder mit einer solchen Regelschaltung (11) verbunden ist,
**dadurch gekennzeichnet,**
**daß** die Regelschaltung (11) eine Temperaturmodellschaltung (18) zur Bestimmung der höchsten im Kraftstoff-Fördersystem vorhandenen Temperatur (Tₘₐₓ) aufweist, um die erforderliche Förderleistung der elektrischen Kraftstoffpumpe (1) basierend auf der so bestimmten höchsten im Kraftstoff-Fördersystem vorhandenen Temperatur zu regeln.

2. Schaltungsanordnung nach Anspruch 1, **dadurch gekennzeichnet, daß** die Temperaturmodellschaltung (18) der Regelschaltung (11) mit einem ersten Temperatursensor (13) zur Erfassung der Motortemperatur (Tₘₒₜ), einem zweiten Temperatursensor (14) zur Erfassung der Umgebungstemperatur (T_{umgeb}) und einer Einrichtung (16) zur Erfassung der Fahrzeuggeschwindigkeit (v_{kfz}) gekoppelt ist.

3. Schaltungsanordnung nach Anspruch 1 oder 2, **dadurch gekennzeichnet, daß** die Regelschaltung (11) weiter eine Druckbestimmungsschaltung (19) zur Berechnung des erforderlichen Kraftstoffdrucks (pₛₒₗₗ) aus der durch die Temperaturmodellschaltung (18) bestimmten höchsten im Kraftstoff-Fördersystem vorhandenen Temperatur (Tₘₐₓ) aufweist.

4. Schaltungsanordnung nach einem der Ansprüche 1 bis 3, **dadurch gekennzeichnet, daß** die Regelschaltung (11) mit einem Drucksensor (12) zur Erfassung des aktuell im Kraftstoff-Fördersystem vorhandenen Kraftstoffdrucks (pᵢₛₜ) gekoppelt ist.

5. Schaltungsanordnung nach Anspruch 4, **dadurch gekennzeichnet, daß** die Regelschaltung (11) eine Steuersignal-Erzeugungsschaltung (21) aufweist, die auf der Basis des aktuell im Kraftstoff-Fördersystem vorhandenen Kraftstoffdrucks (pᵢₛₜ) und des von der Druckbestimmungsschaltung (19) berechneten erforderlichen Kraftstoffdrucks (pₛₒₗₗ) ein der erforderlichen Förderleistung der elektrischen Kraftstoffpumpe (1) entsprechendes Steuersignal erzeugt.

6. Schaltungsanordnung nach einem der Ansprüche 1 bis 5, **dadurch gekennzeichnet, daß** das der erforderlichen Förderleistung der elektrischen Kraftstoffpumpe (1) entsprechende Steuersignal ein pulsweitenmoduliertes Spannungssignal ist.

7. Verfahren zur Regelung einer elektrischen Kraftstoffpumpe in einem rücklauffreien Kraftstoff-Fördersystem, das eine elektrische Kraftstoffpumpe (1) aufweist, die in einem Kraftstofftank (2) angeordnet ist und Kraftstoff aus dem Kraftstofftank in eine erste Kraftstoffleitung (3) zu einer Hochdruckpumpe (4) fördert, welche über eine zweite Kraftstoffleitung (5) mit mehreren Kraftstoff-Einspritzventilen (7) verbunden ist, **dadurch gekennzeichnet, daß** eine Temperaturmodellschaltung (18) einer Regelschaltung (11) die höchste im Kraftstoff-Fördersystem vorhandene Temperatur bestimmt und daß die erforderliche Förderleistung der elektrischen Kraftstoffpumpe (1) basierend auf der so bestimmten höchsten im Kraftstoff-Fördersystem vorhandenen Temperatur (Tₘₐₓ) geregelt wird.

8. Verfahren nach Anspruch 7, **dadurch gekennzeichnet, daß** die höchste im Kraftstoff-Fördersystem vorhandene Temperatur (Tₘₐₓ) basierend auf einer Motortemperatur (Tₘₒₜ), einer Umgebungstemperatur (T_{umgeb}) und einer Fahrzeuggeschwindigkeit (v_{kfz}) bestimmt wird.

9. Verfahren nach Anspruch 8, **dadurch gekennzeichnet, daß** bei der Bestimmung der höchsten im Kraftstoff-Fördersystem vorhandenen Temperatur (Tₘₐₓ) eine Kühlwirkung durch die das Kraftstoff-Fördersystem umströmende Luft und/oder der Betriebszustand des Motors berücksichtigt werden.

10. Verfahren nach einem der Ansprüche 7 bis 9, **dadurch gekennzeichnet, daß** die erforderliche Förderleistung der elektrischen Kraftstoffpumpe (1) basierend auf dem erforderlichen Kraftstoffdruck (pₛₒₗₗ) im Kraftstoff-Fördersystem, welcher aus der bestimmten höchsten im Kraftstoff-Fördersystem vorhandenen Temperatur (Tₘₐₓ) berechnet wird, bestimmt wird.

11. Verfahren nach Anspruch 10, **dadurch gekennzeichnet, daß** bei der Berechnung des erforderlichen Kraftstoffdrucks (pₛₒₗₗ) der aktuelle Betriebszustand des Motors berücksichtigt wird.

12. Verfahren nach einem der Ansprüche 7 bis 11, **dadurch gekennzeichnet, daß** der aktuell im Kraftstoff-Fördersystem vorhandene Kraftstoffdruck (pᵢₛₜ) erfaßt und die erforderliche Förderleistung der elektrischen Kraftstoffpumpe (1) basierend auf dem aktuell im Kraftstoff-Fördersystem vorhandenen Kraftstoffdruck (pᵢₛₜ) bestimmt wird.

13. Verfahren nach einem der Ansprüche 10 bis 12, **dadurch gekennzeichnet, daß** bei der Bestimmung der erforderlichen Förderleistung der elektrischen Kraftstoffpumpe (1) die Kraftstofftemperatur (Tₜₐₙₖ) im Kraftstofftank (2) berücksichtigt wird.

14. Verfahren nach Anspruch 13, **dadurch gekennzeichnet, daß** die Kraftstofftemperatur (Tₜₐₙₖ) im Kraftstofftank (2) basierend auf der Umgebungstemperatur (T_{umgeb}) und unter Berücksichtigung der Abgastemperatur (T_{abgas}) nach dem Hauptkatalysator bestimmt wird.

## Claims

1. Circuit arrangement for controlling an electric fuel pump in a fuel delivery system without a return, having
an electric fuel pump (1), which is arranged in a fuel tank (2), for delivering fuel from the fuel tank into a first fuel line (3) and to a high-pressure pump (4) which is connected to a plurality of fuel-injection valves (7) via a second fuel line (5); and
an engine controller (9) for controlling the delivery rate of the electric fuel pump (1), with the engine controller (9) comprising a control circuit (11) for determining the required delivery rate of the electric fuel pump (1) and emitting a control signal which corresponds to the required delivery rate determined, or being connected to such a control circuit (11),
**characterized**
**in that** the control circuit (11) has a temperature model circuit (18) for determining the highest temperature (Tₘₐₓ) present in the fuel delivery system, in order to control the required delivery rate of the electric fuel pump (1) in a manner based on the highest temperature present in the fuel delivery system and determined in this way.

2. Circuit arrangement according to Claim 1, **characterized in that** the temperature model circuit (18) of the control circuit (11) is coupled to a first temperature sensor (13) for detecting the engine temperature (T_{eng}), to a second temperature sensor (14) for detecting the ambient temperature (T_{ambient}), and to a device (16) for detecting the vehicle speed (vᵥₑₕ).

3. Circuit arrangement according to Claim 1 or 2, **characterized in that** the control circuit (11) also has a pressure-determination circuit (19) for calculating the required fuel pressure (pₛₑₜ) from the highest temperature (Tₘₐₓ) present in the fuel delivery system and determined by the temperature model circuit (18).

4. Circuit arrangement according to one of Claims 1 to 3, **characterized in that** the control circuit (11) is coupled to a pressure sensor (12) for detecting the fuel pressure (pact) currently present in the fuel delivery system.

5. Circuit arrangement according to Claim 4, **characterized in that** the control circuit (11) has a control signal-generating circuit (21) which generates a control signal, which corresponds to the required delivery rate of the electric fuel pump (1), on the basis of the fuel pressure (p_{act}) currently present in the fuel delivery system and the required fuel pressure (pₛₑₜ) calculated by the pressure-detertnination circuit (19).

6. Circuit arrangement according to one of Claims 1 to 5, **characterized in that** the control signal, which corresponds to the required delivery rate of the electric fuel pump (1), is a pulse-width-modulated voltage signal.

7. Method for controlling an electric fuel pump in a fuel delivery system without a return, which system has an electric fuel pump (1) which is arranged in a fuel tank (2) and delivers fuel from the fuel tank into a first fuel line (3) and to a high-pressure pump (4) which is connected to a plurality of fuel-injection valves (7) via a second fuel line (5), **characterized in that** a temperature model circuit (18) of a control circuit (11) determines the highest temperature present in the fuel delivery system, and **in that** the required delivery rate of the electric fuel pump (1) is controlled in a manner based on the highest temperature (Tₘₐₓ) present in the fuel delivery system and determined in this way.

8. Method according to Claim 7, **characterized in that** the highest temperature (Tₘₐₓ) present in the fuel delivery system is determined in a manner based on an engine temperature (T_{eng}), an ambient temperature (T_{ambient}) and a vehicle speed (Vᵥₑₕ).

9. Method according to Claim 8, **characterized in that** a cooling effect produced by the air flowing around the fuel delivery system and/or the operating state of the engine is taken into account when the highest temperature (Tₘₐₓ) present in the fuel delivery system is determined.

10. Method according to one of Claims 7 to 9, **characterized in that** the required delivery rate of the electric fuel pump (1) is determined in a manner based on the required fuel pressure (pₛₑₜ) in the fuel delivery system, this fuel pressure being calculated from the determined highest temperature (Tₘₐₓ) present in the fuel delivery system.

11. Method according to Claim 10, **characterized in that** the current operating state of the engine is taken into account when the required fuel pressure (pₛₑₜ) is calculated.

12. Method according to one of Claims 7 to 11, **characterized in that** the fuel pressure (pact) currently present in the fuel delivery system is detected, and the required delivery rate of the electric fuel pump (1) is determined in a manner based on the fuel pressure (pact) currently present in the fuel delivery system.

13. Method according to one of Claims 10 to 12, **characterized in that** the fuel temperature (Tₜₐₙₖ) in the fuel tank (2) is taken into account when the required delivery rate of the electric fuel pump (1) is determined.

14. Method according to Claim 13, **characterized in that** the fuel temperature (Tₜₐₙₖ) in the fuel tank (2) is determined in a manner based on the ambient temperature (T_{ambient}) and taking into account the exhaust gas temperature (Tₑₓₕₐᵤₛₜ) downstream of the main catalytic converter.

## Revendications

1. Montage électrique pour la régulation d'une pompe électrique d'alimentation en carburant dans un système d'alimentation en carburant sans retour, avec
une pompe électrique (1) d'alimentation en carburant, qui est disposée dans un réservoir de carburant (2), pour véhiculer du carburant du réservoir dans une première conduite (3) de carburant menant à une pompe (4) à haute pression qui est reliée par l'intermédiaire d'une deuxième conduite (5) de carburant à plusieurs soupapes (7) d'injection de carburant, et
une unité (9) de commande du moteur pour réguler le débit de la pompe électrique (1) d'alimentation en carburant, l'unité (9) de commande du moteur comprenant un circuit de régulation (11) pour déterminer le débit nécessaire de la pompe électrique (1) d'alimentation en carburant et délivrer un signal de commande correspondant au débit nécessaire déterminé, ou étant reliée à un tel circuit de régulation (11),
**caractérisé en ce que** le circuit de régulation (11) présente un circuit (18) de modèle de température pour déterminer la température maximale (Tₘₐₓ) présente dans le système d'alimentation en carburant, afin de réguler le débit nécessaire de la pompe électrique (1) d'alimentation en carburant sur la base de la température maximale présente dans le système d'alimentation en carburant ainsi déterminée.

2. Montage électrique selon la revendication 1, **caractérisé en ce que** le circuit (18) de modèle de température du circuit de régulation (11) est couplé à un premier capteur (13) de température pour détecter la température du moteur (Tₘₒₜ), à un deuxième capteur (14) de température pour détecter la température ambiante (T_{umgeb}), et à un organe (16) pour détecter la vitesse du véhicule (v_{kfz}).

3. Montage électrique selon la revendication 1 ou 2, **caractérisé en ce que** le circuit de régulation (11) présente en outre un circuit (19) de détermination de pression pour calculer la pression de carburant nécessaire (pₛₒₗₗ) à partir de la température maximale (Tₘₐₓ) présente dans le système d'alimentation en carburant déterminée par le circuit (18) de modèle de température.

4. Montage électrique selon l'une quelconque des revendications 1 à 3, **caractérisé en ce que** le circuit de régulation (11) est couplé à un capteur de pression (12) pour détecter la pression de carburant (pᵢₛₜ) actuellement présente dans le système d'alimentation en carburant.

5. Montage électrique selon la revendication 4, **caractérisé en ce que** le circuit de régulation (11) présente un circuit (21) de production de signal de commande qui, sur la base de la pression de carburant (pᵢₛₜ) actuellement présente dans le système d'alimentation en carburant et de la pression de carburant nécessaire (pₛₒₗₗ) calculée par le circuit (19) de détermination de pression, produit un signal de commande correspondant au débit nécessaire de la pompe électrique (1) d'alimentation en carburant.

6. Montage électrique selon l'une quelconque des revendications 1 à 5, **caractérisé en ce que** le signal de commande correspondant au débit nécessaire de la pompe électrique (1) d'alimentation en carburant est un signal de tension à modulation de largeur d'impulsions.

7. Procédé de régulation d'une pompe électrique d'alimentation en carburant dans un système d'alimentation en carburant sans retour qui présente une pompe électrique (1) d'alimentation en carburant qui est disposée dans un réservoir de carburant (2) et qui véhicule du carburant du réservoir dans une première conduite (3) de carburant menant à une pompe (4) à haute pression qui est reliée par l'intermédiaire d'une deuxième conduite (5) de carburant à plusieurs soupapes (7) d'injection de carburant, **caractérisé en ce qu'**un circuit (18) de modèle de température d'un circuit de régulation (11) détermine la température maximale présente dans le système d'alimentation en carburant, et le débit nécessaire de la pompe électrique (1) d'alimentation en carburant est régulé sur la base de la température maximale (Tₘₐₓ) présente dans le système d'alimentation en carburant ainsi déterminée.

8. Procédé selon la revendication 7, **caractérisé en ce que** la température maximale (Tₘₐₓ) présente dans le système d'alimentation en carburant est déterminée sur la base d'une température du moteur (Tₘₒₜ), d'une température ambiante (T_{umgeb}) et d'une vitesse du véhicule (V_{kfz}).

9. Procédé selon la revendication 8, **caractérisé en ce que**, pour la détermination de la température maximale (Tₘₐₓ) présente dans le système d'alimentation en carburant, on tient compte d'une action de refroidissement par l'air circulant autour du système d'alimentation en carburant, et/ou de la situation de fonctionnement du moteur.

10. Procédé selon l'une quelconque des revendications 7 à 9, **caractérisé en ce que** le débit nécessaire de la pompe électrique (1) d'alimentation en carburant est déterminé sur la base de la pression de carburant nécessaire (pₛₒₗₗ) dans le système d'alimentation en carburant, qui est calculée à partir de la température maximale (Tₘₐₓ) déterminée présente dans le système d'alimentation en carburant.

11. Procédé selon la revendication 10, **caractérisé en ce que**, pour le calcul de la pression de carburant nécessaire (pₛₒₗₗ), on tient compte de la situation actuelle de fonctionnement du moteur.

12. Procédé selon l'une quelconque des revendications 7 à 11, **caractérisé en ce qu'**on détecte la pression de carburant (pᵢₛₜ) actuellement présente dans le système d'alimentation en carburant, et le débit nécessaire de la pompe électrique (1) d'alimentation en carburant est déterminé sur la base de la pression de carburant (pᵢₛₜ) actuellement présente dans le système d'alimentation en carburant

13. Procédé selon l'une quelconque des revendications 10 à 12, **caractérisé en ce que**, pour la détermination du débit nécessaire de la pompe électrique (1) d'alimentation en carburant, on tient compte de la température du carburant (Tₜₐₙₖ) dans le réservoir de carburant (2).

14. Procédé selon la revendication 13, **caractérisé en ce que** la température du carburant (Tₜₐₙₖ) dans le réservoir de carburant (2) est déterminée sur la base de la température ambiante (T_{umgeb}) et en tenant compte de la température des gaz d'échappement (T_{abgas}) en aval du catalyseur principal.
